# FASCICULE DE BREVET EUROPEEN

(11) **EP 0 654 610 B1**
(45) Date de publication et mention de la délivrance du brevet: **07.01.1998**
(21) Numéro de dépôt: 94470035.0
(22) Date de dépôt: 04.11.1994
(51) Int. Cl.: F16B 31/06

(54) **Système d'assemblage d'une pièce en tôle avec une pièce rigide**
Verbindungssystem zwischen einem Blechelement und einem starren Element
System for assembling a sheet metal element with a rigid element

(30) Priorité: 24.11.1993 FR 9314218
(43) Date de publication de la demande: 24.05.1995
(73) Titulaire: SOLLAC, 92800 Puteaux (FR)
(72) Inventeur: Carmet, Alain, F-57070 St Julien les Metz (FR); Col, Alain, F-57100 Thionville (FR)
(74) Mandataire: Ventavoli, Roger

(56) Documents cités:
- EP-A- 0 325 951
- US-A- 4 280 319

## Description

La présente invention se situe dans le domaine de l'assemblage de pièces mécaniques et concerne plus particulièrement l'assemblage de deux pièces (dont l'une au moins est une pièce en tôle) par une liaison mécanique rigide, par exemple au moyen de vis, écrous, rivets, soudure, etc. (EP-A-0 325 951).

Il est courant, dans des ensembles mécaniques, d'avoir à fixer une pièce massive sur une pièce en tôle, dont l'épaisseur est faible par rapport à ses autres dimensions et aux dimensions de la pièce massive. Par exemple, dans une tondeuse à gazon, le bloc moteur est fixé par des vis sur le carter de la tondeuse constitué d'une pièce en tôle emboutie.

Dans le cas d'un assemblage par vis, la fixation est réalisée par serrage d'une zone plane de la pièce en tôle entre la tête de la vis et une surface plane de la pièce massive. On utilise aussi des fixations dites "sur collet relevé", dans lesquelles un collet est formé sur le bord du trou de passage de la vis dans la tôle, par déformation de la tôle ; dans ce cas le serrage est effectué par appui de la tête de la vis sur ce collet.

Des assemblages par rivets ou goujons s'effectuent de manière similaire. La fixation d'une tôle métallique sur une autre pièce peut aussi être réalisée par des points de soudure localisés.

Toutes ces fixations se font généralement sur des surfaces plates de la tôle, laquelle se trouve ainsi fortement rigidifiée au voisinage de chaque fixation.

Il apparaît fréquemment dans les tôles ainsi assemblées des fissures de fatigue qui soit s'amorcent à partir du trou, réalisé dans la tôle pour y faire passer l'organe de fixation, et s'étendent radialement, soit apparaissent à proximité du bord de la tête de vis ou de l'écrou, et se propagent sensiblement circonférentiellement autour de la zone de la tôle fixée rigidement à la pièce massive.

Ces fissurations sont d'autant plus fréquentes et s'accroissent d'autant plus vite que les pièces de l'assemblage sont soumises à des vibrations importantes. Elles peuvent conduire à la rupture complète de la tôle autour de la zone de fixation, et donc à la désolidarisation de l'assemblage.

L'invention a pour but de résoudre les problèmes évoqués ci-dessus et de fournir un mode de liaison plus fiable en réduisant le risque de fissuration.

Avec ces objectifs en vue, l'invention a pour objet un système d'assemblage d'une pièce en tôle avec une pièce rigide fixée mécaniquement sur la dite tôle en une zone de contact sensiblement plane, caractérisé en ce que la tôle comporte autour de la zone de contact une pluralité d'ondulations circulaires concentriques.

Grâce à l'invention, les fissurations de la tôle lors de l'utilisation de l'assemblage peuvent être supprimées ou au moins le risque d'apparition de ces fissurations peut être considérablement réduit.

En effet, ces fissurations sont des fissurations de fatigue qui apparaissent dans des zones de concentration de contraintes, soumises à des variations de contraintes ou à des mouvements cycliques, généralement provoqués par des vibrations. L'invention permet de réduire ces concentrations de contraintes localisées au voisinage de la zone de liaison en les répartissant à distance de cette zone. En effet, la zone de la tôle qui est rigidement liée à la pièce rigide est soumise à un régime de vibration qui diffère fortement, du fait de la flexibilité de la tôle, de celui existant dans des zones plus éloignées de la fixation. Il s'ensuit que les contraintes sont maximales dans la tôle à la limite entre ces zones.

Les ondulations réalisées selon l'invention autour de la zone de fixation constituent une zone d'amortissement des vibrations qui provoque un étalement des contraintes dans la tôle et donc une réduction de leur gradient.

Autrement dit, l'effort tranchant qui s'exerce juste au bord de la zone rigidement fixée est transformé en une sollicitation de flexion répartie sur une grande surface.

Par l'ondulation, l'ensemble de la tôle acquiert une certaine flexibilité par rapport à la zone localisée liée rigidement à la pièce massive, qui permet donc des mouvements vibratoires différents dans la tôle et dans la pièce rigide sans générer de fortes contraintes localisées.

Selon une disposition préférentielle, la tôle comporte plusieurs ondulations concentriques d'amplitude dégressive vers la périphérie. Cette disposition assure une répartition des contraintes encore meilleure et une évolution du gradient de contrainte plus progressive.

Préférentiellement, les ondulations sont réalisées sur la tôle, avant assemblage, par un emboutissage, effectué avant le perçage de l'orifice de passage des moyens de fixations.

D'autres caractéristiques et avantage de l'invention apparaîtront dans la description qui va être faite à titre d'exemple, de deux modes de réalisation d'un assemblage conforme à l'invention.

On se reportera aux dessins annexés dans lesquels :
- la figure 1 est une vue en coupe de l'assemblage d'une tôle sur un carter rigide selon l'art antérieur,
- la figure 2 est une vue de dessus à plus petite échelle de l'assemblage de la figure 1,
- la figure 3 est une vue en coupe d'un assemblage similaire réalisé conformément à la présente invention,
- la figure 4 est une vue en perspective et arraché de la tôle utilisée dans l'assemblage de la figure 3.
- la figure 5 est une vue en coupe d'une variante avec fixation sur collet relevé.

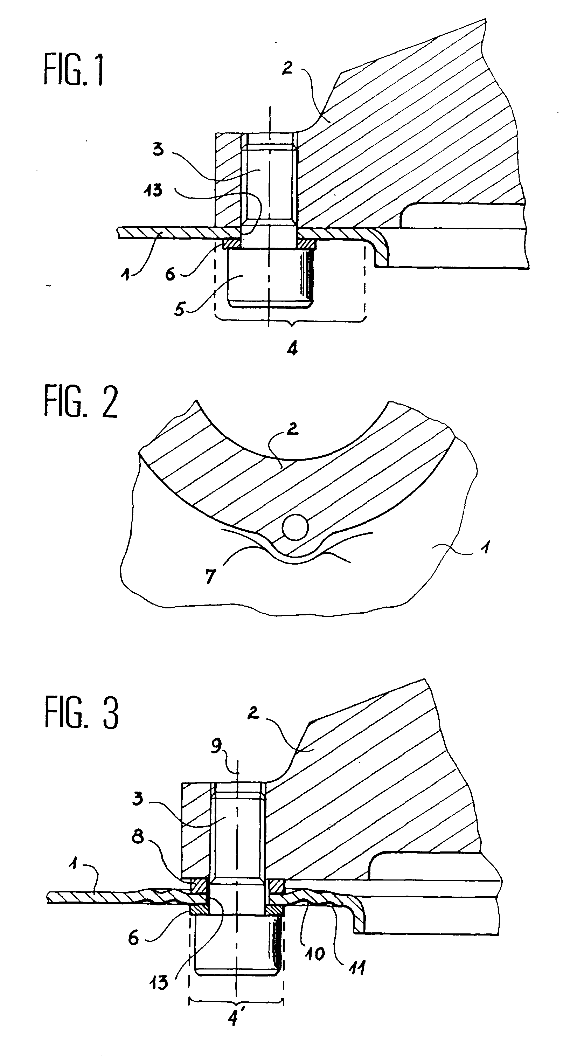

Sur le dessin de la figure 1, on a représenté la fixation, selon l'art antérieur, d'une tôle 1 sur une pièce rigide, telle que par exemple un carter de moteur 2, au moyen d'une vis 3 passant par un orifice 13 de la tôle.

Dans la zone de contact 4 de la tôle 1 avec le carter 2 et même au delà de cette zone, la tôle est plane. Elle est serrée contre le carter 2 par la tête 5 de la vis 3, sous laquelle est placée une rondelle 6. Dans ce mode de fixation, notamment lorsque les pièces sont soumises à des vibrations, il apparaît fréquemment des fissurations 7, ou criques de fatigue, qui suivent approximativement le bord de la pièce rigide (voir figure 2).

Le système d'assemblage, conforme à l'invention, décrit ci-après, permet d'éviter ces fissurations.

Le dessin de la figure 3 représente un assemblage correspondant à celui de la figure 1, dans lequel la tôle 1 a été préformée au voisinage de la zone de fixation.

La tôle est serrée entre deux rondelles 6, 8 dont le diamètre extérieur définit la zone de contact 4' de la tôle. Autour de cette zone, la tôle comporte deux ondulations 10, 11 circulaires concentriques. La rondelle 8 sert à espacer la tôle 1 du carter 2 pour que les ondulations 10, 11 ne soient pas en contact avec le carter. La rondelle 8 pourrait être remplacée par un bossage de mêmes dimensions prévu sur le carter 2.

L'amplitude des ondulations est de l'ordre de une à deux fois l'épaisseur de la tôle et leur longueur d'onde de l'ordre de dix fois l'épaisseur de la tôle.

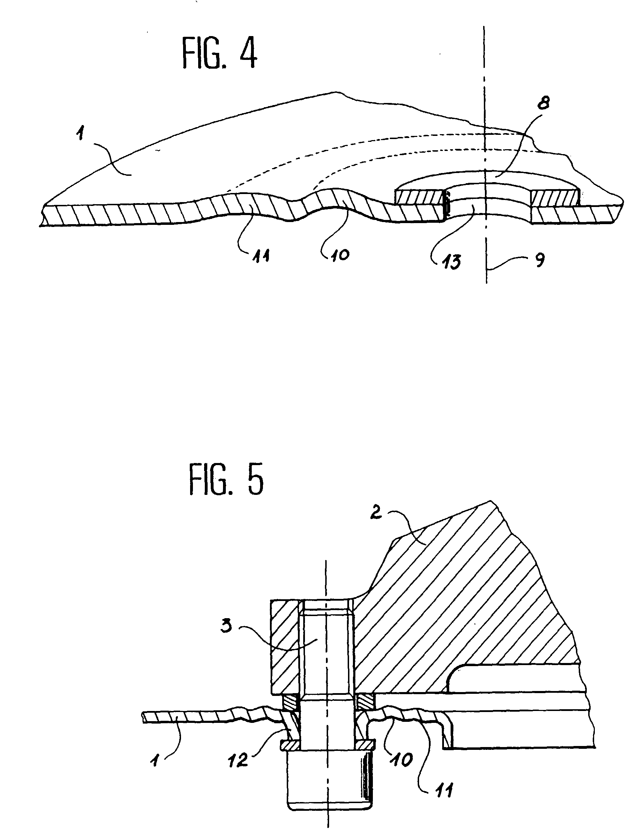

Comme on le voit mieux sur le dessin de la figure 4, les ondulations ont une amplitude décroissante vers la périphérie, c'est-à-dire que la hauteur de l'ondulation 11 la plus éloignée de l'axe 9 de la vis est inférieure à celle de l'ondulation 10 plus proche de cet axe. Cette disposition permet de réduire encore les contraintes locales maximales par rapport au cas où les deux ondulations seraient de même amplitude.

Un calcul des contraintes a été effectué à titre d'exemple, en considérant une tôle de 1 mm d'épaisseur soumise à des conditions de charge identiques, dans trois mode de fixation :
- dans le premier mode, la tôle était plane et fixée selon l'art antérieur ; les contraintes déterminées étaient de l'ordre de 208 MPa,
- dans le second mode, la fixation était réalisée conformément à l'invention, avec deux ondulations de même amplitude ; les contraintes étaient d'environ 190 MPa,
- dans le troisième mode, les ondulations étaient dégressives ; les contraintes étaient d'environ 181 MPa.

Le dessin de la figure 5 représente une variante de l'invention, utilisant une fixation sur collet relevé. Dans ce cas, la tôle 1 est conformée de manière à présenter au bord du trou 13 de passage de la vis 3 un collet 12 et les ondulations 10, 11 sont réalisées autour de ce collet. Les ondulations sont formées aisément par emboutissage et en particulier peuvent l'être en même temps que la mise en forme générale de la pièce en tôle.

L'invention n'est pas limitée aux modes de réalisation décrits ci-dessus. En particulier, le nombre d'ondulations peut être supérieur à deux ; et on peut utiliser d'autres moyens de fixation que des vis, par exemple des goujons ou rivets, ou même une soudure par point.

Les ondulations, au lieu d'être réparties de part et d'autre du plan général de la tôle, peuvent être réalisées entièrement d'un même côté de celle-ci, ce qui permet d'éviter l'emploi d'une rondelle interposée entre la tôle et la pièce rigide.

L'invention s'applique en particulier lors de l'utilisation de tôle métallique, notamment en acier, mais elle peut également s'appliquer avec des tôles de tous autres matériaux.

## Revendications

1. Assemblage d'une pièce en tôle (1) et d'une pièce rigide (2) fixée mécaniquement sur la tôle en une zone de contact (4') sensiblement plane, caractérisé en ce que la tôle comporte autour de la zone de contact une pluralité d'ondulations (10, 11) circulaires concentriques.

2. Assemblage selon la revendication 1, caractérisé en ce que la tôle comporte plusieurs ondulations (10, 11) concentriques d'amplitude dégressive vers la périphérie.

3. Assemblage selon la revendication 1, caractérisé en ce que la tôle est fixée sur la pièce rigide par un moyen de fixation (3) traversant un orifice (13) de la tôle.

4. Assemblage selon la revendication 3, caractérisé en ce que la tôle comporte autour de l'orifice (13) un collet relevé (12).

5. Assemblage selon l'une des revendications précédentes, caractérisé en ce que une rondelle (8) est interposée entre la tôle et la pièce rigide.

6. Assemblage selon l'une des revendications précédentes, caractérisé en ce que les ondulations sont réalisées sur la tôle, avant assemblage, par un emboutissage.

7. Assemblage selon l'une des revendications précédentes, caractérisé en ce que la tôle est en acier.

## Patentansprüche

1. Verbindung zwischen einem Blechteil (1) und einem steifen Teil (2), das mechanisch am Blechteil in einer im wesentlichen ebenen Kontaktzone (4') befestigt ist, dadurch gekennzeichnet, dass das Blech um die Kontaktzone herum eine Vielzahl von konzentrischen kreisförmigen Wellenlinien (10, 11) aufweist.

2. Verbindung nach Anspruch 1, dadurch gekennzeichnet, dass das Blech mehrere konzentrische Wellenlinien (10, 11) mit zum Umfang hin abnehmender Amplitude aufweist.

3. Verbindung nach Anspruch 1, dadurch gekennzeichnet, dass das Blech am steifen Teil mittels einer Befestigungsanordnung (3) befestigt ist, welche eine Öffnung (13) im Blech durchsetzt.

4. Verbindung nach Anspruch 3, dadurch gekennzeichnet, dass das Blech um die Öffnung (13) herum einen erhöhten Rand (12) aufweist.

5. Verbindung nach einem der vorhergehenden Ansprüche, dadurch gekennzeichnet, dass eine Unterlegscheibe (8) zwischen dem Blech und dem steifen Teil angeordnet ist.

6. Verbindung nach einem der vorhergehenden Ansprüche, dadurch gekennzeichnet, dass die Wellenlinien im Blech vor dessen Zusammenbau durch einen Tiefziehvorgang ausgebildet sind.

7. Verbindung nach einem der vorhergehenden Ansprüche, dadurch gekennzeichnet, dass das Blech aus Stahl besteht.

## Claims

1. Assembly of a sheet-metal component (1) and of a rigid component (2) mechanically fixed to the metal sheet at a substantially plane area of contact (4'), characterized in that the metal sheet includes, around the contact area, several concentric circular corrugations (10, 11).

2. Assembly according to Claim 1, characterized in that the metal sheet includes several concentric corrugations (10, 11) of amplitude decreasing towards the periphery.

3. Assembly according to Claim 1, characterized in that the metal sheet is fixed to the rigid component by a fixing means (3) which passes through a hole (13) in the metal sheet.

4. Assembly according to Claim 3, characterized in that the metal sheet includes, around the hole (13), a raised flange (12).

5. Assembly according to one of the preceding claims, characterized in that a washer (8) is interposed between the metal sheet and the rigid component.

6. Assembly according to one of the preceding claims, characterized in that the corrugations are produced on the metal sheet, before assembly, by stamping.

7. Assembly according to one of the preceding claims, characterized in that the metal sheet is made of steel.
